# EUROPÄISCHE PATENTSCHRIFT

(11) **EP 3 433 160 B1**
(45) Veröffentlichungstag und Bekanntmachung des Hinweises auf die Patenterteilung: **13.11.2019**
(21) Anmeldenummer: 16711281.2
(22) Anmeldetag: 22.03.2016
(51) Int. Cl.: B62D 23/00, B62D 33/04, B62D 53/04, B62D 29/04

(54) **HINTERWAGEN FÜR EIN NUTZFAHRZEUG UND NUTZFAHRZEUG MIT EINEM SOLCHEN HINTERWAGEN**
REAR PART FOR A UTILITY VEHICLE AND UTILITY VEHICLE WITH SUCH A REAR PART
PARTIE ARRIÈRE DE VÉHICULE POUR UN VÉHICULE UTILITAIRE ET VÉHICULE UTILITAIRE MUNI D'UNE TELLE PARTIE ARRIÈRE DE VÉHICULE

(43) Veröffentlichungstag der Anmeldung: 30.01.2019
(73) Patentinhaber: Schmitz Cargobull AG, 48341 Altenberge (DE)
(72) Erfinder: BEELMANN, Reinhard, 45721 Haltern am See (DE)
(74) Vertreter: Cohausz & Florack
(86) Internationale Anmeldenummer: PCT/EP2016/056240
(87) Internationale Veröffentlichungsnummer: WO 2017/162271

(56) Entgegenhaltungen:
- EP-A1- 2 524 856
- DE-A1-102013 110 494
- DE-C- 866 175
- FR-A1- 2 535 668
- US-A- 3 392 857
- US-A- 3 825 089

## Beschreibung

Die Erfindung betrifft einen Hinterwagen für ein Nutzfahrzeug, das aus einem Vorderwagen und einem Hinterwagen zusammengesetzt ist.

Der Hinterwagen und der Vorderwagen sind dabei getrennt voneinander vorgefertigt und erst nach ihrer separaten Fertigung miteinander verkoppelt worden. Zu diesem Zweck umfasst der Hinterwagen ein Koppelmodul zum festen Ankoppeln des Hinterwagens an den Vorderwagen. Ebenso umfasst der Hinterwagen einen sich flächig in Längs- und Breitenrichtung des Hinterwagens erstreckenden Boden, einen über dem Boden errichteten Aufbau, der einen Laderaum für ein zu transportierendes Gut umgrenzt, und mindestens ein an der vom Aufbau abgewandten Unterseite des Bodens angeordnetes Funktionsmodul.

Bei diesem Funktionsmodul handelt es sich typischerweise um ein aus Längsträgern und Querträgern gebildetes Chassis, das einerseits den Boden stützt und an dem andererseits das Laufwerk des Hinterwagens befestigt ist, das aus mindestens einer Achse und den daran gelagerten Hinterrädern des Nutzfahrzeugs gebildet ist.

Beispiele für Fahrzeuge, die aus separat vorgefertigten Vorder- und Hinterwagen oder anderen ebenfalls separat vorgefertigten Bauteilgruppen zusammengesetzt sind, sind in großer Zahl bekannt (DE 42 28 314 A, EP 0 278 479 B1, US 2009/0236877 A1, US 9,004,510 B2, US 6,755,461 B2). Die EP 2 524 856 A1 zeigt ebenfalls eine solche Vorrichtung,- mit den Merkmalen des Oberbegriffs von Anspruch 1. Gemeinsam ist diesen Beispielen, dass die einzelnen Baugruppen jeweils ein aus verschiedenen Trägern oder desgleichen gebildetes Chassis umfassen, das die Funktionselemente der betreffenden Bauteilgruppe trägt. Die Verkopplung der Bauteilgruppen erfolgt dann über zueinander korrespondierende Ankoppelmodule, die ebenfalls an den Trägern der Bauteilgruppen angeordnet befestigt sind. Nach dem Zusammenfügen der Bauteilgruppen ist so ein sich über das jeweilige Fahrzeug erstreckendes Chassis gebildet, dass in der Regel nicht nur die einzelnen Funktionselemente, wie Laufwerk, Motor, Fahrerkabine etc., trägt, sondern gleichzeitig auch die Grundlage für den Karosserieaufbau des Fahrzeugs bildet.

Bei kleineren Nutzfahrzeugen, die typischerweise zum Ausliefern und Verteilen von Transportgut auf kurzen oder mittleren Strecken eingesetzt werden, wird hinsichtlich des Karosserieaufbaus unterschieden zwischen der üblicherweise dem Vorderwagen des Fahrzeugs zugeordneten Frontkarosserie, die die Ummantelung des Motors und die Fahrerkabine umfasst, und einem davon getrennten, typischerweise kästen- oder kofferartigen Transportaufbau, der den das jeweilige Transportgut aufnehmenden Laderaum umgrenzt. Während der Vorderwagen mit der Frontkarosserie und das Chassis des Hinterwagens mit den für den Fahrtbetrieb des Nutzfahrzeugs benötigten Komponenten üblicherweise als "Grundfahrzeug" vom Fahrzeughersteller geliefert wird, wird der Transportaufbau in der Regel von hierauf spezialisierten Herstellern auf dem Hinterwagen errichtet. Diese Aufteilung ermöglicht einerseits eine hohe Standardisierung bei der Fertigung des Grundfahrzeugs und andererseits eine kostengünstige Herstellung von an die Bedürfnisse des jeweiligen Nutzers oder die jeweilige Transportaufgabe angepassten Transportaufbauten.

Trotz dieser Vorteile hat sich vor dem Hintergrund des voranstehend erläuterten Standes der Technik die Aufgabe ergeben, mindestens eine Komponente des Aufbaus von aus einem Vorderwagen und einem Hinterwagen zusammengesetzten Nutzfahrzeugen so zu verbessern, dass bei erhöhter Flexibilität bei der Ausstattung der Nutzfahrzeuge der Fertigungsaufwand vermindert ist.

Ebenso sollte ein entsprechend konzeptioniertes Nutzfahrzeug angegeben werden.

In Bezug auf die Komponente hat die Erfindung diese Aufgabe durch einen gemäß Anspruch 1 ausgebildeten Hinterwagen für ein Nutzfahrzeug gelöst.

Ein die voranstehend genannte Aufgabe erfindungsgemäß lösendes Nutzfahrzeug ist in Anspruch 11 angegeben.

Vorteilhafte Ausgestaltungen der Erfindung sind in den abhängigen Ansprüchen angegeben und werden nachfolgend wie der allgemeine Erfindungsgedanke im Einzelnen erläutert.

Bei der erfindungsgemäß verbesserten Komponente eines aus einem Vorder- und einem Hinterwagen gebildeten Nutzfahrzeugs handelt es sich somit um den Hinterwagen. Dieser umfasst wie die aus dem Stand der Technik bekannten Hinterwagen ein Koppelmodul zum festen Ankoppeln des Hinterwagens an den jeweiligen Vorderwagen des Nutzfahrzeugs, einen sich flächig in Längs- und Breitenrichtung des Hinterwagens erstreckenden Boden, einen über dem Boden errichteten Aufbau, der einen Laderaum für ein zu transportierendes Gut umgrenzt, und mindestens ein an der vom Aufbau abgewandten Unterseite des Bodens angeordnetes Funktionsmodul. Als Funktionsmodul sind dabei sämtliche Bauelemente oder Baugruppen anzusehen, die für den Fahrbetrieb des Fahrzeugs oder für andere Funktionen benötigt werden, die das Fahrzeug ausführen muss, um seinen Zweck zu erfüllen. Hierzu zählen beispielsweise Einrichtungen zum Temperieren oder Aufrechterhalten einer bestimmten Atmosphäre im vom Aufbau des Hinterwagens umgebenen Laderaum oder Aggregate, die zum Be- oder Entladen des Laderaums dienen, wie Ladebordwände, Hebebühnen oder desgleichen.

Erfindungsgemäß sind nun das Ankoppelmodul und das jeweilige mindestens eine Funktionsmodul direkt an dem Boden befestigt. Gleichzeitig bilden der Boden und der Aufbau eine selbsttragende Einheit, die den Abstand zwischen dem Ankoppelmodul und dem jeweiligen Funktionsmodul ungestützt überbrückt.

Bei einem erfindungsgemäßen Hinterwagen bilden der Transportaufbau und der Boden somit eine freitragende Baueinheit, durch die sämtliche im Gebrauch auftretenden statischen und dynamischen Belastungen geleitet werden.

Insbesondere ist der Hinterwagen dabei so ausgelegt, dass alle Gewichts - und Fahrdynamikkräfte durch den Aufbau geleitet werden, wogegen die Bodenbaugruppe als zentrales Element für die Aufnahme von Funktionsmodulen dient. Selbstverständlich können dabei der Aufbau und der Boden des Hinterwagens so aufeinander abgestimmt werden, dass sich die notwendige Steifigkeit und Stabilität des Hinterwagens durch das Zusammenwirken von Boden und Aufbau ergibt.

Entscheidend für die Erfindung ist jedoch, dass die aus Boden und Aufbau gebildete Baueinheit selbsttragend ist und als solche keiner Unterstützung durch ein separates Chassis oder desgleichen benötigt. Bei einem erfindungsgemäßen Hinterwagen sind der Boden, der Aufbau und die Funktionsmodule somit nicht mehr, wie beim Stand der Technik üblich, auf oder an einem Chassis errichtet oder durch dieses getragen. Stattdessen sind die Funktionsmodule bei einem erfindungsgemäßen Hinterwagen direkt am Boden oder am Aufbau befestigt, so dass sie ausschließlich über den Boden und/oder den Aufbau mit dem Vorderwagen des Nutzfahrzeugs verbunden sind.

Kennzeichnend für einen erfindungsgemäßen Hinterwagen ist somit, dass der gesamte Hinterwagen einschließlich der für den Fahrbetrieb erforderlichen, auf den Hinterwagen entfallenden Komponenten unabhängig vom Vorderwagen gefertigt werden können. Bei einem erfindungsgemäßen Nutzfahrzeug können Vorderwagen und Hinterwagen somit vollständig separat hergestellt werden und müssen schließlich nur noch miteinander "verheiratet" werden, indem der Hinterwagen über das hierzu bei ihm vorgesehene Ankoppelmodul mit einem korrespondierenden Koppelmodul des Vorderwagens verkoppelt wird.

Ein weiterer Vorteil der Erfindung besteht dabei darin, dass der Hinterwagen als Bausatz zusammengestellt, zu einem Montageort verbracht, dort aufgebaut und anschließend mit dem vom Hersteller des Vorderwagens getrennt davon ebenfalls zum Montageort gelieferten Vorderwagen zusammengesetzt werden kann. Auf diese Weise kann der Aufwand für den Transport des Vorderwagens und der Hinterwagenkomponenten minimiert werden. So lassen sich beispielsweise ohne den Chassisteil, der bei konventionellen Nutzfahrzeugen auf den Hinterwagen entfällt und stets mit dem Vorderwagen verbunden ausgeliefert wird, mittels eines Transportfahrzeugs deutlich mehr Vorderwagen zum Montageort transportieren. Genauso kann der Bausatz für den erfindungsgemäß ausgebildeten Hinterwagen bei minimalem Raumbedarf gepackt und zum Montageort gebracht werden.

Ein erfindungsgemäßes Nutzfahrzeug ist dementsprechend dadurch gekennzeichnet, dass es aus einem Vorderwagen und einem erfindungsgemäß ausgebildeten Hinterwagen zusammengesetzt ist, wobei der Vorderwagen und der Hinterwagen über das Ankoppelmodul fest miteinander verbunden sind. Typischerweise umfasst dabei der Vorderwagen einen Motor zum Antrieb des Nutzfahrzeugs, eine Fahrerkabine und eine Lenkeinrichtung zum Lenken des Nutzfahrzeugs. Insbesondere eignet sich die Erfindung für Nutzfahrzeuge in der Gewichtsklasse 2,8 - 7,5 Tonnen, wie sie typischerweise im Lieferverkehr eingesetzt werden.

Da bei einem erfindungsgemäßen Hinterwagen das Ankoppelmodul direkt an der aus Boden und Aufbau gebildeten Einheit befestigt ist und somit hinsichtlich der Formgebung und Anordnung des Koppelmoduls keine Rücksicht auf eine bestimmte Lage von Chassisteilen und desgleichen mehr genommen werden muss, können erfindungsgemäß ausgebildete Hinterwagen problemlos mit Vorderwagen verkoppeln, die von unterschiedlichen Herstellern oder in unterschiedlichen Ausführungen angeboten werden. Hierzu ist es bedarfsweise lediglich erforderlich, das jeweilige Ankoppelmodul entsprechend den Vorgaben des Vorderwagens anzupassen oder umgekehrt.

Im Ergebnis wird so durch die Erfindung die Flexibilität der Gestaltung eines Nutzfahrzeug-Hinterwagens und eines erfindungsgemäß ausgebildeten Nutzfahrzeugs bei minimiertem Kostenaufwand und optimierten Fertigungsbedingungen maximiert.

Typischerweise handelt es sich bei dem mindestens einen Funktionsmodul, das erfindungsgemäß an der selbsttragenden Baueinheit Boden/Aufbau eines erfindungsgemäßen Hinterwagens befestigt ist, um einen Laufwagen, der mindestens eine Achse und daran gelagerte Hinterräder des Nutzfahrzeugs umfasst. Das Laufwerk kann dabei ein Zukaufteil sein, das von einem Lieferanten als Baueinheit geliefert und direkt an den Boden des erfindungsgemäßen Hinterwagens angebaut wird. Auch sind unterschiedlichste Ausführungen des Laufwagens möglich, um beispielsweise dem jeweiligen individuellen Kundenwunsch entsprechend bestimmte Nutz- oder Achslasten, bestimmte Bereifungen, Fahrhöhen und desgleichen zu ermöglichen. Dabei können beispielsweise für die Räder des Laufwerks auch Bodenmulden oder Radkästen an dem Boden ausgebildet sein. Die Achse mit den daran gelagerten Hinterrädern kann angetrieben oder unangetrieben sein. Bei einer über eine Kardanwelle vom Motor des Vorderwagens angetriebenen Achse umfasst das Laufwerk dann beispielsweise auch die Getriebeelemente, die für die Kraftübertragung auf die Räder der angetriebenen Achse erforderlich sind. Bei elektrisch betriebenen Fahrzeugen mit den Rädern direkt zugeordneten Antriebsmotoren kann das Laufwerk selbstverständlich ebenso diese Antriebsmotoren umfassen.

Genauso können neben dem Ankoppelmodul und dem mindestens einen, beispielsweise als Laufwagen der voranstehend erläuterten Art ausgebildeten Funktionsmodul mindestens ein weiteres Funktionsmodul oder mehrere weitere Funktionsmodule an dem Boden befestigt und über den Boden mit den jeweils anderen Modulen verbunden sein. Der Boden des erfindungsgemäßen Aufbaus bildet in diesem Fall die Plattform, an der die unterschiedlichen Funktionsmodule des Hinterwagens hängend oder stehend befestigt sind. In vielen Anwendungsfällen bietet sich dabei eine am Boden hängende Anordnung der Funktionsmodule an, so dass der unterhalb des Bodens üblicherweise vorhandene Freiraum genutzt und der Laderaum eine maximale Größe annehmen kann.

Der Boden muss dabei nicht eben sein, sondern kann an die Form des jeweils zu transportierenden Guts angepasst sein. So kann er beispielsweise Mulden oder andere Form- oder Funktionselemente, wie Einsenkungen, Erhebungen, Anschläge, Schienen etc., aufweisen, wie sie im Stand der Technik regelmäßig bei Nutzfahrzeugen vorgesehen sind, um das Transportgut auf einfache Weise ordnungsgemäß und sicher verstauen zu können.

Genauso muss der Aufbau eines erfindungsgemäßen Hinterwagens auch nicht notwendig koffer- oder kastenförmig sein, sondern kann eine an die jeweilige Transportaufgabe angepasste Form besitzen.

Dabei kann der Aufbau eines erfindungsgemäßen Hinterwagens eine Tragstruktur umfassen, in der die Längsseitenwände, ein Dach, eine Stirnwand und/oder eine Rückwand des Aufbaus befestigt sind. Eine solche Tragstruktur erlaubt es, die Wände selbst aus Materialien zu fertigen, die zwar einen ausreichenden Schutz des im Laderaum verstauten Transportguts sicherstellen, jedoch selbst keine Formstabilität oder Festigkeit besitzen, die für die erfindungsgemäß vorgesehene selbsttragende Konstruktion der aus Aufbau und Boden gebildeten Einheit ausreichen würden. Typischerweise sind bei mit einer solchen Tragstruktur aufgebauten Aufbauten die Wände oder das Dach als Planen ausgebildet, die zum Be- und Entladen von der Tragstruktur abgenommen werden können.

Selbstverständlich ist es ebenso möglich, die Wände und/oder das Dach des Aufbaus aus Materialien zu fertigen, die eine hohe Eigensteifigkeit besitzen, und als solche dem Aufbau die notwendige Tragfähigkeit verleihen, ohne dass es dazu einer gesonderten Tragstruktur bedarf. Soll eine hohe Wärmeisolierung des Laderaums des Hinterwagens gewährleistet werden, eignen sich als Material für die Wände und/oder das Dach solcher Aufbauten beispielsweise Sandwich-Materialien, bei denen eine hochisolierende, beispielsweise aus einem Schaumstoff bestehende Schicht an ihren Außenseiten jeweils mit einer oder mehreren Lagen hochfester und/oder undurchlässiger Schichten belegt ist, um eine ausreichende Steifigkeit und Beständigkeit gegen Feuchtigkeit zu gewährleisten. Bei einer hinsichtlich der Temperierung des Laderaums unkritischen Anwendung können die Wände oder das Dach selbstverständlich in ebenso bekannter Weise aus einfachen Blech- oder Kunststoffmaterialien bestehen, wobei auch diese mehrlagig ausgeführt sein können, um bestimmte Eigenschaften, wie minimiertes Gewicht, optimierte Korrosionsbeständigkeit, Verschleißbeständigkeit oder optische Anmutung, zu gewährleisten.

Bei einem in sich fest aufgebauten Aufbau können die Wände oder das Dach als Wand- oder Dachelemente vorgefertigt werden, die in an sich bekannter Weise über an ihnen vorgesehene Verbindungselemente zu dem Aufbau zusammengefügt werden können. Dabei können die Wand- und Dachelemente aus in ebenso bekannter Weise einzeln vorgefertigten und anschließend zusammengefügten Paneelen zusammengesetzt sein.

Um die erfindungsgemäß vorgesehene Eigentragfähigkeit - gegebenenfalls in Kombination mit dem Aufbau - zu entfalten, kann auch der Boden des erfindungsgemäßen Hinterwagens als eine Sandwichkonstruktion mit einer dem Laderaum zugeordneten oberen Decklage, einer der Unterseite des Bodens zugeordneten unteren Decklage und einem zwischen den Decklagen vorhandenen Zwischenraum ausgebildet sein, in dem Aussteifungselemente positioniert sind. Bei den Aussteifungselementen kann es sich in an sich bekannter Weise um Quer- oder Längsträger handeln, die als Bestandteil des Bodens den Boden nach Art eines Fachwerks aussteifen. Die freien Bereiche des Boden-Zwischenraums können dann in ebenso an sich bekannter Weise mit einem isolierenden Material gefüllt sein, um eine optimierte thermische Abschirmung des Laderaums auch zur Unterseite des Hinterwagens hin zu gewährleisten.

Auch können speziell an den Stellen des Bodens, an denen jeweils eines der Funktionsmodule des Hinterwagens oder der Aufbau mit dem Boden verbunden ist, Verstärkungen vorgesehen sein, welche die von dem Funktionsmodul ausgehende Belastung großflächig auf oder in dem Boden verteilt.

Die an einem erfindungsgemäßen Hinterwagen befestigten Module können unterschiedlichste Funktionen erfüllen. Hierzu zählen Module für die Beleuchtung, für die E-Mobilität (Batterien, Ladeleitung, Versorgung, Ladebordwand), für den Anschluss von Pneumatik- oder Hydraulikleitungen, z.B. für die Bremsanlage, für die Übertragung von Daten (Kommunikation, Steuerung, Kamera, etc.), für die Ankopplung von Kühlgeräten (Kältemittelleitungen, Stromversorgung).

So kann im Heckbereich des Hinterwagens als Funktionsmodul ein Heckmodul angeordnet sein, das einen Unterfahrschutz, eine Beleuchtungseinrichtung und/oder eine Kupplungseinrichtung umfasst.

Ebenso kann als Funktionsmodul ein Energiespeicher von dem Boden getragen sein. Bei diesem Energiespeicher kann es sich beispielsweise um eine Batterie handeln, die zum Antrieb des Fahrzeugs oder eines Zusatzaggregats benötigte elektrische Energie speichert.

Im Frontbereich des Bodens oder des Aufbaus kann des Weiteren als Funktionsmodul ein Anschlussmodul angeordnet sein, das Anschlüsse zur Ankopplung von Leitungen zur Übertragung von Informationen, Signalen oder Energien zwischen dem Hinterwagen und dem Vorderwagen des Nutzfahrzeugs umfasst, dem der Hinterwagen im Gebrauch zugeordnet ist.

Im Bereich mindestens einer der Längsseiten des Hinterwagens kann als Funktionsmodul jeweils eine Verkleidung, ein Seiteneinstieg oder ein Kraftstofftank angeordnet sein.

Ebenso kann es sich bei dem am erfindungsgemäßen Hinterwagen befestigten Funktionsmodul um eine so genannte Transportkältemaschine handeln, die zum Temperieren des vom Aufbau des Hinterwagens umgrenzten Laderaums bzw. der darin verstauten Ware dient.

Nachfolgend wird die Erfindung anhand eines Ausführungsbeispiels näher erläutert. Die Zeichnung zeigt:
- Fig. 1: ein Nutzfahrzeug in einer seitlichen, teilweise aufgeschnittenen Ansicht;

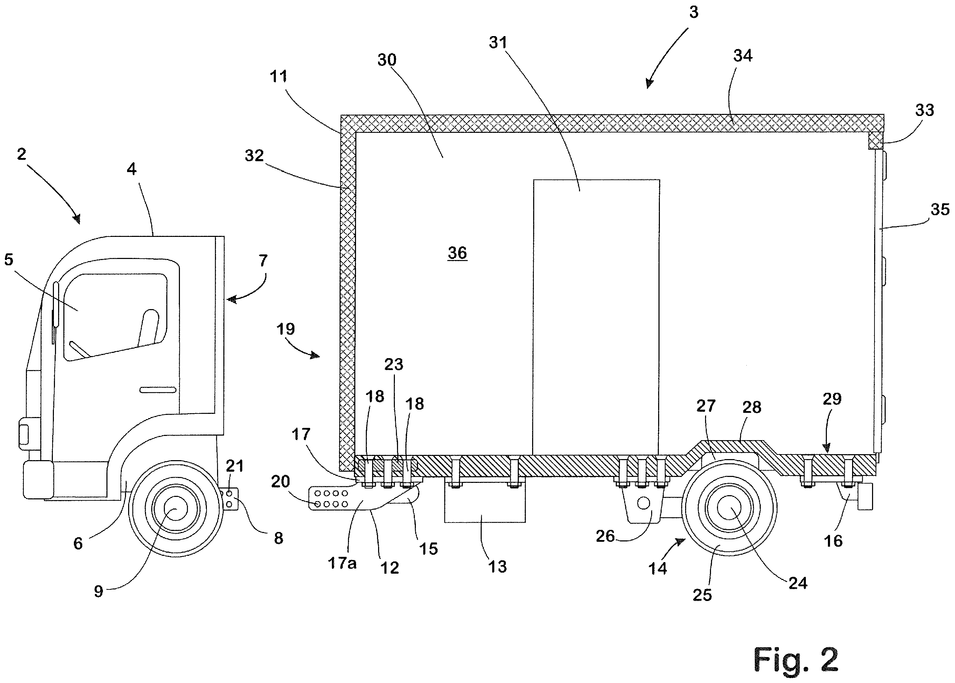

- Fig. 2: den Vorderwagen und den Hinterwagen des Nutzfahrzeugs gemäß Fig. 1 in einer der Fig. 1 entsprechenden Ansicht.

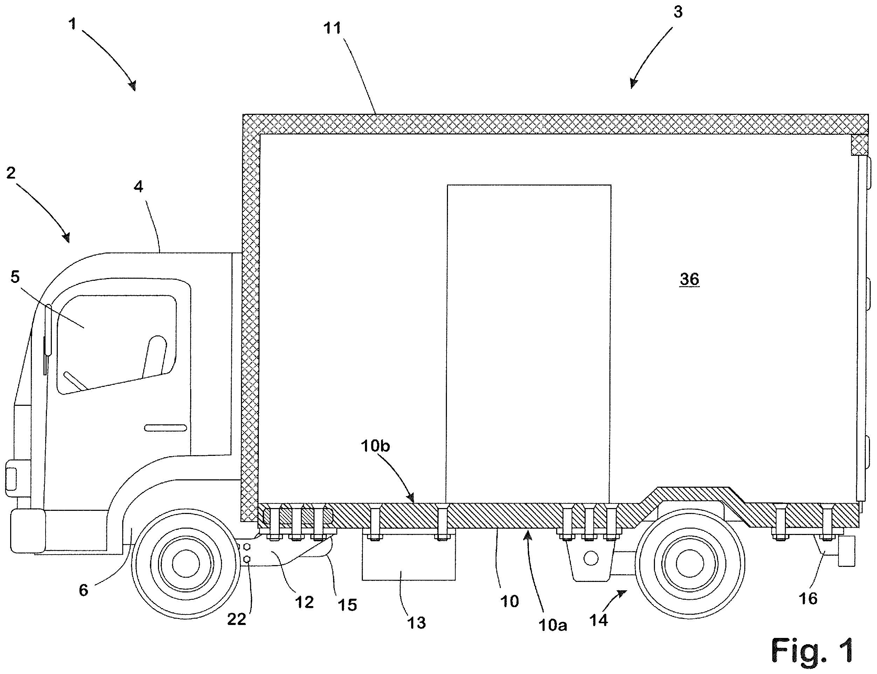

Bei dem in Fig. 1 gezeigten Nutzfahrzeug 1 handelt es sich um einen "Transporter", wie er typischerweise zur Auslieferung von Versandgut und desgleichen eingesetzt wird. Fahrzeuge dieser Art haben üblicherweise ein zulässiges Gesamtgewicht von 2,8 - 7,5 Tonnen.

Das Nutzfahrzeug 1 ist aus einem Vorderwagen 2 und einem Hinterwagen 3 zusammengesetzt.

Der unabhängig vom und an einem anderen Produktionsort als der Hinterwagen 3 gefertigte Vorderwagen 2 umfasst eine Karosserie 4, in der einerseits der Motor, das Getriebe, die Vorderräder und die Lenkung des Nutzfahrzeugs 1 und andererseits die Fahrerkabine 5 des Nutzfahrzeugs 1 untergebracht sind. Die Karosserie 4 ist dabei in konventioneller Weise auf einem Rahmen 6 aufgebaut, der auch die anderen Funktionselemente des Vorderwagens 2 trägt.

An der Rückseite 7 des Vorderwagens 2 ist an dem Rahmen 6 ein Verbindungsadapter 8 befestigt, der etwa auf Höhe der Achse 9 der Vorderräder des Nutzfahrzeugs 1 positioniert ist und in Richtung des Hinterwagens 3 von dem Rahmen 6 absteht.

Der Hinterwagen 3 weist demgegenüber keine mit dem Rahmen 6 des Vorderwagens 2 vergleichbare Tragstruktur auf. Stattdessen sind beim Hinterwagen 3 ein Boden 10 und ein darüber errichteter kofferförmiger Aufbau 11 vorgesehen, die gemeinsam eine selbsttragende Baueinheit bilden. Der Boden 10 dient dabei als Träger für ein Ankoppelmodul 12 und verschiedene weitere Funktionskomponenten, wie einem Batteriemodul 13, einem Laufwerksmodul 14, einem Anschlussmodul 15 und einem Heckmodul 16, die jeweils an der Unterseite 10a des Bodens 10 befestigt sind.

Das aus miteinander verschweißten Stahlblechzuschnitten gebildete Ankoppelmodul 12 umfasst dazu einen Plattenabschnitt 17, der mittels durch den Boden 10 geführter Schrauben 18 an der Unterseite 10a des Bodens 10 gehalten ist. An den Plattenabschnitt 17 ist ein Koppelabschnitt 17a angeschweißt, der rechtwinklig zum Plattenabschnitt 17 ausgerichtet ist und schwertartig in Richtung des Vorderwagens 2 über die Stirnseite 19 des Hinterwagens 3 hinaussteht. In den Koppelabschnitt 17a sind Durchgangsöffnungen 20 eingeformt, zu denen korrespondierende Durchgangsöffnungen 21 in den Verbindungsadapter 8 eingeformt sind.

Zum Zusammenfügen des Nutzfahrzeugs 1 wird der Vorderwagen 2 mit seiner Rückseite 7 in Richtung der Stirnseite 19 des Hinterwagens 3 bewegt, bis die Durchgangsöffnungen 20 des Adaptermoduls 12 mit den Durchgangsöffnungen 21 des Verbindungsadapters zur Deckung gebracht sind und der Vorderwagen 2 und der Hinterwagen 3 mittels durch die Durchgangsöffnungen 20,21 gesteckter Schrauben 22 fest miteinander verbunden werden kann. Anschließend werden die im Anschlussmodul 15 vorgesehenen Anschlüsse der Leitungen für die elektrische, pneumatische oder hydraulische Versorgung des Hinterwagens 3 mit den in einem korrespondierend ausgebildeten, hier jedoch nicht sichtbaren Anschlussmodul vorgesehenen Versorgungsausgängen des Vorderwagens 2 angeschlossen.

Der Boden 10 ist beispielsweise als Sandwichkonstruktion ausgebildet, die eine der Unterseite 10a zugeordnete Unterplatte, ein darauf liegendes Fachwerk aus Längs- und Querträgern sowie eine den Boden 10 an seiner Oberseite 10b abschließende Oberplatte umfasst. Um in den Bereichen, in denen jeweils ein Funktionsmodul an den Boden 10 angeschlossen ist, eine ausreichende Festigkeit zu gewährleisten, kann dort jeweils ein plattenförmiges Verstärkungselement 23 in den Boden 10 eingesetzt sein, über das die aufgenommenen Kräfte großflächig im Boden 10 verteilt werden.

Das in gleicher Weise an den Boden 10 angehängte Batteriemodul 13 dient zur Versorgung der elektrischen Komponenten des Vorderwagens 2 oder des Hinterwagens 3 und kann beispielsweise dann, wenn es sich bei dem Motor des Vorderwagens 2 um ein Hybrid- oder Elektroaggregat handelt, auch zur Versorgung des Motors genutzt werden.

Das Laufwerksmodul 14 umfasst eine nicht angetriebene Achse 24, an der die Hinterräder 25 des Hinterwagens 3 gelagert sind. Die Achse 24 ist über eine Längslenkeranordnung 26, die wiederum direkt am Boden 10 befestigt ist, gelenkig am Boden 10 befestigt und über eine Dämpfer/Feder-Kombination 27 direkt am an der Unterseite 10a des Bodens 10 abgestützt. Um im Bereich des Laufwerksmoduls 14 eine ausreichende Bodenfreiheit für die Hinterräder 25 zu gewährleisten, ist dort am Boden 10 jeweils ein Radkasten 28 vorgesehen.

Das im Heckbereich 29 des Bodens 10 an dessen Unterseite 10a befestigte Heckmodul 16 umfasst die vorgeschriebenen Signalleuchten und eine Kupplung, über die ein hier nicht gezeigter Anhänger an das Nutzfahrzeug 1 angehängt werden kann.

Optional zusätzlich kann im Heckbereich 29 auch noch ein hier nicht gezeigtes Ladebordwandmodul befestigt sein. Ebenso können zur Verbesserung der Aerodynamik Seitenverkleidungsmodule oder, im Fall, dass in einer Seitenwand 30 des Aufbaus 11 eine Seitentür 31 vorgesehen ist, ein Seiteneinstiegsmodul vorgesehen sein, das eine ausklappbare Leiter oder Treppe umfasst, um das Einsteigen zu erleichtern.

Der Aufbau 11 ist aus zwei den Längsseiten des Nutzfahrzeugs 1 zugeordneten festen Seitenwänden, von denen hier wegen der gewählten Schnittdarstellung nur die eine mit der Seitentür 31 versehene Seitenwand 30 gezeigt ist, einer Stirnwand 32, einer Rückwand 33 und einem Dach 34 gebildet. Die Seitenwände 30, die Stirnwand 32 und das Dach 34 bestehen dabei in an sich bekannter Weise aus nach Art von Sandwich-Elementen vorgefertigten Paneelen, die über in ihren Randbereichen vorgesehene, hier nicht gezeigte Aussteifungselemente so fest miteinander verkoppelt sind, dass der Aufbau 11 eine in sich steife, formstabile Struktur erhält.

Auf diese Weise bildet der Aufbau 11 gemeinsam mit dem Boden 10 eine freitragende Baueinheit, die den Abstand zwischen der Achse 24 mit den Hinterrädern 25 und dem Ankoppelmodul 12 genauso frei und ungestützt überbrückt wie den heckseitig frei über die Achse 24 hinausstehenden Heckbereich 29 des Hinterwagens 3. Die Rückwand 33 ist üblicherweise mit einer doppelflügeligen Türe 35 versehen, um die Beladung des vom Aufbau 11 umgrenzten Laderaums 36 zu ermöglichen. Dabei kann die Rückwand 33 als Rahmenkonstruktion ausgebildet sein, die die Steifigkeit und Tragfähigkeit der aus Aufbau 11 und Boden 10 gebildeten Baueinheit zusätzlich unterstützt.

Im Gebrauch nimmt die aus Aufbau 11 und Boden 10 gebildete Baueinheit ohne Unterstützung durch ein Chassis oder desgleichen sämtliche Gewichts- und dynamischen Kräfte auf, die auf den Hinterwagen 3 wirken.

### BEZUGSZEICHEN

- 1: Nutzfahrzeug
- 2: Vorderwagen
- 3: Hinterwagen
- 4: Karosserie des Vorderwagens 2
- 5: Fahrerkabine des Vorderwagens 2
- 6: Rahmen des Vorderwagens 2
- 7: Rückseite des Vorderwagens 2
- 8: Verbindungsadapter des Vorderwagens 2
- 9: Achse der Vorderräder des Nutzfahrzeugs 1
- 10: Boden des Hinterwagens 3
- 10a: Unterseite des Bodens 10
- 10b: Oberseite des Bodens 10
- 11: kofferförmiger Aufbau des Hinterwagens 3
- 12: Ankoppelmodul des Hinterwagens 3
- 13: Batteriemodul
- 14: Laufwerksmodul
- 15: Anschlussmodul
- 16: Heckmodul
- 17: Plattenabschnitt des Ankoppelmoduls 12
- 17a: Koppelabschnitt des Ankoppelmoduls 12
- 18: Schrauben
- 19: Stirnseite des Hinterwagens 3
- 20: Durchgangsöffnungen
- 21: Durchgangsöffnungen
- 22: Schrauben
- 23: Verstärkungselement
- 24: Achse des Hinterwagens 3
- 25: Hinterräder des Hinterwagens 3
- 26: Längslenkeranordnung
- 27: Dämpfer/Feder-Kombination
- 28: Radkasten
- 29: Heckbereich des Bodens 10
- 30: Seitenwand des Aufbaus 11
- 31: Seitentür des Aufbaus 11
- 32: Stirnwand des Aufbaus 11
- 33: Rückwand des Aufbaus 11
- 34: Dach des Aufbaus 11
- 35: rückwandseitige Türe des Aufbaus 11
- 36: Laderaum

## Patentansprüche

1. Hinterwagen für ein Nutzfahrzeug (1), wobei der Hinterwagen (3) ein Ankoppelmodul (12) zum festen Ankoppeln des Hinterwagens (3) an einen Vorderwagen (2) des Nutzfahrzeugs (1), einen sich flächig in Längs- und Breitenrichtung des Hinterwagens (3) erstreckenden Boden (10), einen über dem Boden (10) errichteten Aufbau (11), der einen Laderaum (36) für ein zu transportierendes Gut umgrenzt, und mindestens ein an der vom Aufbau (11) abgewandten Unterseite des Bodens (10) angeordnetes Funktionsmodul (13,14,15,16) umfasst, **dadurch gekennzeichnet, dass** das Ankoppelmodul (12) und das jeweilige Funktionsmodul (13,14,15,16) direkt an dem Boden (10) befestigt sind und der Boden (10) und der Aufbau (11) eine selbsttragende Einheit bilden, die den Abstand zwischen dem Ankoppelmodul (12) und dem jeweiligen Funktionsmodul (13,14,15,16) ungestützt überbrückt.

2. Hinterwagen nach Anspruch 1, **dadurch gekennzeichnet, dass** das Funktionsmodul ein Laufwagen (14) ist, der mindestens eine Achse (24) und daran gelagerte Hinterräder (25) des Nutzfahrzeugs (1) umfasst.

3. Hinterwagen nach einem der voranstehenden Ansprüche, **dadurch gekennzeichnet, dass** neben dem Ankoppelmodul (12) und dem einen Funktionsmodul (13,14,15,16) mindestens ein weiteres Funktionsmodul (13,14,15,16) oder mehrere weitere Funktionsmodule (13,14,15,16) an dem Boden (10) befestigt und über den Boden (10) mit den jeweils anderen Modulen (13,14,15,16) verbunden sind.

4. Hinterwagen nach einem der voranstehenden Ansprüche, **dadurch gekennzeichnet, dass** das Funktionsmodul (13,14,15,16) frei hängend an der Unterseite (10a) des Bodens (10) befestigt ist.

5. Hinterwagen nach einem der voranstehenden Ansprüche, **dadurch gekennzeichnet, dass** im Heckbereich (29) des Hinterwagens (3) als Funktionsmodul ein Heckmodul (16) angeordnet ist, das einen Unterfahrschutz, eine Beleuchtungseinrichtung und/oder eine Kupplungseinrichtung umfasst.

6. Hinterwagen nach einem der voranstehenden Ansprüche, **dadurch gekennzeichnet, dass** als Funktionsmodul ein Energiespeicher (13) von dem Boden (10) getragen ist.

7. Hinterwagen nach einem der voranstehenden Ansprüche, **dadurch gekennzeichnet, dass** im Frontbereich des Bodens (10) oder des Aufbaus (11) als Funktionsmodul ein Anschlussmodul (15) angeordnet ist, das Anschlüsse zur Ankopplung von Leitungen zur Übertragung von Informationen, Signalen oder Energien zwischen dem Hinterwagen (3) und dem Vorderwagen (2) des Nutzfahrzeugs umfasst, dem der Hinterwagen (3) im Gebrauch zugeordnet ist.

8. Hinterwagen nach einem der voranstehenden Ansprüche, **dadurch gekennzeichnet, dass** als Funktionsmodul im Bereich einer der Längsseiten des Hinterwagens (3) eine Verkleidung, ein Seiteneinstieg oder ein Kraftstofftank angeordnet ist.

9. Hinterwagen nach einem der voranstehenden Ansprüche, **dadurch gekennzeichnet, dass** der Boden (10) eine Sandwichkonstruktion mit einer dem Laderaum (36) zugeordneten oberen Decklage, einer der Unterseite des Bodens (10) zugeordneten unteren Decklage und einem zwischen den Decklagen vorhandenen Zwischenraum ist, in dem Aussteifungselemente positioniert sind.

10. Hinterwagen nach einem der voranstehenden Ansprüche, **dadurch gekennzeichnet, dass** der Boden (10) in dem Bereich, in dem das jeweilige Funktionsmodul (13,14,15,16) angeordnet ist, mit einer Verstärkung versehen ist, welche die von dem Funktionsmodul (13,14,15,16) ausgehende Belastung großflächig auf oder in dem Boden (10) verteilt.

11. Nutzfahrzeug, das aus einem Vorderwagen (2) und einem gemäß einem der voranstehenden Ansprüche ausgebildeten Hinterwagen (3) zusammengesetzt ist, wobei der Vorderwagen (2) und der Hinterwagen (3) über das Ankoppelmodul (12) fest miteinander verbunden sind.

12. Nutzfahrzeug nach Anspruch 11, **dadurch gekennzeichnet, dass** der Vorderwagen (2) einen Motor zum Antrieb des Nutzfahrzeugs (1), eine Fahrerkabine (5) und eine Lenkeinrichtung zum Lenken des Nutzfahrzeugs (1) umfasst.

## Claims

1. Rear part for a utility vehicle (1), wherein the rear part (3) comprises a coupling module (12) for fixed coupling of the rear part (3) to a front part (2) of the utility vehicle (1), a floor (10) which extends in a planar manner in the longitudinal and width direction of the rear part (3), a superstructure (11) which is erected over the floor (10) and which delimits a loading compartment (36) for goods which are intended to be transported, and at least one functional module (13, 14, 15, 16) which is arranged on the lower side of the floor (10) facing away from the superstructure (11), **characterised in that** the coupling module (12) and the respective functional module (13, 14, 15, 16) are secured directly to the floor (10) and the floor (10) and the superstructure (11) form a self-supporting unit which bridges the distance between the coupling module (12) and the respective functional module (13, 14, 15, 16) in an unsupported manner.

2. Rear part according to claim 1, **characterised in that** the functional module is a carriage (14) which comprises at least one axle (24) and rear wheels (25) of the utility vehicle (1) which are supported thereon.

3. Rear part according to either of the preceding claims, **characterised in that**, in addition to the coupling module (12) and the one functional module (13, 14, 15, 16), at least one additional functional module (13, 14, 15, 16) or a plurality of additional functional modules (13, 14, 15, 16) is/are secured to the floor (10) and via the floor (10) to the other modules (13, 14, 15, 16), respectively.

4. Rear part according to any one of the preceding claims, **characterised in that** the functional module (13, 14, 15, 16) is secured in a freely suspended manner to the lower side (10a) of the floor (10).

5. Rear part according to any one of the preceding claims, **characterised in that** in the rear region (29) of the rear part (3) there is arranged as a functional module a rear module (16), which comprises an underride protection, an illumination device and/or a coupling device.

6. Rear part according to any one of the preceding claims, **characterised in that** an energy store (13) is carried by the floor (10) as a functional module.

7. Rear part according to any one of the preceding claims, **characterised in that** a connection module (15) is arranged in the front region of the floor (10) or the superstructure (11) as a functional module, which connection module (15) comprises connections for coupling lines for transmitting information, signals or types of energy between the rear part (3) and the front part (2) of the utility vehicle, with which the rear part (3) is associated during use.

8. Rear part according to any one of the preceding claims, **characterised in that** a covering, a side entrance or a fuel tank is arranged as a functional module in the region of one of the longitudinal sides of the rear part (3).

9. Rear part according to any one of the preceding claims, **characterised in that** the floor (10) is a sandwich-like construction having an upper covering layer which is associated with the loading compartment (36), a lower covering layer which is associated with the lower side of the floor (10) and an intermediate space which is provided between the covering layers and in which reinforcement elements are positioned.

10. Rear part according to any one of the preceding claims, **characterised in that** the floor (10), in the region in which the respective functional module (13, 14, 15, 16) is arranged, is provided with a reinforcement which distributes the loading originating from the functional module (13, 14, 15, 16) extensively over or in the floor (10).

11. Utility vehicle which is composed of a front part (2) and a rear part (3) which is formed according to any one of the preceding claims, wherein the front part (2) and the rear part (3) are securely connected to each other by means of the coupling module (12).

12. Utility vehicle according to claim 11, **characterised in that** the front part (2) comprises a motor for driving the utility vehicle (1), a driver's cab (5) and a steering device for steering the utility vehicle (1).

## Revendications

1. Partie arrière de véhicule pour un véhicule utilitaire (1), ladite partie arrière de véhicule (3) comprenant un module d'accouplement (12) destiné à accoupler de manière fixe la partie arrière de véhicule (3) à une partie avant de véhicule (2) du véhicule utilitaire (1), un plancher (10) s'étendant à plat dans le sens de la longueur et de la largeur de la partie arrière de véhicule (3), une caisse (11) bâtie au-dessus du plancher (10) et qui délimite un espace de chargement (36) pour des marchandises à transporter, ainsi qu'au moins un module fonctionnel (13, 14, 15, 16) monté sur la face inférieure du plancher (10), opposée à la caisse (11), **caractérisée en ce que** le module d'accouplement (12) et le module fonctionnel (13, 14, 15, 16) respectif sont fixés directement sur le plancher (10) et ledit plancher (10) et la caisse (11) forment une unité autoporteuse qui comble, sans être supportée, l'espace entre le module d'accouplement (12) et le module fonctionnel (13, 14, 15, 16) respectif.

2. Partie arrière de véhicule selon la revendication 1, **caractérisée en ce que** le module fonctionnel est un chariot (14) qui comporte au moins un essieu (24) et des roues arrières (25) du véhicule utilitaire (1) montées sur celui-ci.

3. Partie arrière de véhicule selon l'une des revendications précédentes, **caractérisée en ce que**, outre le module d'accouplement (12) et ledit module fonctionnel (13, 14, 15, 16), au moins un autre module fonctionnel (13, 14, 15, 16) ou plusieurs autres modules fonctionnels (13, 14, 15, 16) sont fixés sur le plancher (10) et sont reliés par le plancher (10) respectivement aux autres modules (13, 14, 15, 16) respectifs.

4. Partie arrière de véhicule selon l'une des revendications précédentes, **caractérisée en ce que** le module fonctionnel (13, 14, 15, 16) est fixé en suspension libre à la face inférieure (10a) du plancher (10).

5. Partie arrière de véhicule selon l'une des revendications précédentes, **caractérisée en ce que**, à l'arrière (29) de la partie arrière de véhicule (3), un module arrière (16) est agencé en tant que module fonctionnel qui comporte un dispositif anti-encastrement, un dispositif d'éclairage et/ou un dispositif d'accouplement.

6. Partie arrière de véhicule selon l'une des revendications précédentes, **caractérisée en ce qu'**un accumulateur d'énergie (13) est porté par le plancher (10) en tant que module fonctionnel.

7. Partie arrière de véhicule selon l'une des revendications précédentes, **caractérisée en ce qu'**un module de raccordement (15) est agencé à l'avant du plancher (10) ou de la caisse (11) en tant que module fonctionnel qui comporte des raccords pour le couplage de lignes pour la transmission d'informations, de signaux ou d'énergie entre la partie arrière de véhicule (3) et la partie avant de véhicule (2) du véhicule utilitaire, lequel module de raccordement est associé à la partie arrière du véhicule (3) lors de l'usage.

8. Partie arrière de véhicule selon l'une des revendications précédentes, **caractérisée en ce qu'**un revêtement, un accès latéral ou un réservoir de carburant est agencé, en tant que module fonctionnel, dans la zone d'un des côtés longitudinaux de la partie arrière de véhicule utilitaire (3).

9. Partie arrière de véhicule selon l'une des revendications précédentes, **caractérisée en ce que** le plancher (10) est une construction en sandwich avec une couche de recouvrement supérieure associée à l'espace de chargement (36), une couche de recouvrement inférieure associée à la partie inférieure du plancher (10) et un espace intermédiaire présents entre les couches de recouvrement, dans lequel espace intermédiaire des éléments de renforcement sont positionnés.

10. Partie arrière de véhicule selon l'une des revendications précédentes, **caractérisée en ce que** le plancher (10) est pourvu, dans la zone dans laquelle le module fonctionnel respectif (13, 14, 15, 16) est agencé, d'un renforcement, lequel répartit la charge exercée par le module fonctionnel (13, 14, 15, 16) sur une grande surface, sur ou dans le plancher (10).

11. Véhicule utilitaire constitué à partir d'une partie avant de véhicule (2) et d'une partie arrière de véhicule (3) conçue selon l'une des revendications précédentes, la partie avant de véhicule (2) et la partie arrière de véhicule (3) étant fermement reliées l'une à l'autre à l'aide du module de couplage (12).

12. Véhicule utilitaire selon la revendication 11, **caractérisé en ce que** la partie avant de véhicule (2) comporte un moteur pour l'entraînement du véhicule utilitaire (1), une cabine de conducteur (5) et un dispositif de direction pour guider le véhicule utilitaire (1).
